# EUROPEAN PATENT SPECIFICATION

(11) **EP 2 863 320 B1**
(45) Date of publication and mention of the grant of the patent: **27.03.2019**
(21) Application number: 14189229.9
(22) Date of filing: 16.10.2014
(51) Int. Cl.: G06F 17/21, G06F 17/22, G06F 17/27

(54) **Method, terminal and electronic device for processing an e-book document**
Verfahren, Endgerät und elektronische Vorrichtung zur Verarbeitung eines E-Buch-Dokuments
Procédé, terminal et dispositif électronique de traitement d'un document de livre électronique

(30) Priority: 16.10.2013 CN 201310485775
(43) Date of publication of application: 22.04.2015
(73) Proprietor: Xiaomi Inc., Beijing 100085 (CN)
(72) Inventor: Zhang, Jiafang, 100085 Haidian District (CN); Zhang, Lei, 100085 Haidian District (CN)
(74) Representative: Robson, Aidan John

(56) References cited:
- WO-A1-02/19088
- WO-A1-2010/063070
- US-A1- 2008 301 545

## Description

### TECHNICAL FIELD

The present disclosure relates to the field of data processing, and more particularly, to a method, a terminal and an electronic device for processing an e-book document.

### BACKGROUND

With the growing popularity of mobile terminals, reading and editing e-books on mobile terminals is also becoming increasingly popular. In some cases, some e-books have replaced paper books and become primary daily reading tools. Mobile terminals for reading e-books are versatile, such as smart phones, tablets or e-readers.

Currently, e-book documents are edited mainly by using HTML (Hypertext Markup Language), and e-book documents edited by using HTML can be referred to as HTML documents. After the user opens an e-book via a mobile terminal, the mobile terminal may read the HTML document of the e-book into a memory, and convert the e-book into page images that can be viewed by the user through the mobile terminal by interpreting the HTML document. The above interpreting process mainly includes a parsing step, a full paging step, a page object generating step, and a page image generating step, etc.

In the courses of researches and practices, the inventor finds that the way of processing e-books as described above has at least the following problems.

Generally, the storage and computing abilities of a mobile terminal are limited. If an e-book has a relatively large capacity, the data need to be processed in reading the e-book by the mobile terminal may occupy enormous storage resources, thus causing operation efficiencies of the parsing step and the full paging step to decrease when reading the e-book document, and extending the time for the mobile terminal to read the e-book. Moreover, the larger the E-book capacity is, the more excessive memory resources consumed in the parsing step and the full paging step are, such that the operation efficiencies of the mobile terminal decrease. In a severe situation, the mobile terminal may have phenomena of unsmoothness or crashed.

Therefore, how to provide a high efficiency method for processing e-books with short reading time and low memory usage has become the most emergent problem to be solved.

WO 2010/063070 A1 discloses a method for processing an e-book document comprising: obtaining an e-book document; dividing content of the e-book document into a plurality of segments in accordance with a preset segmentation manner; composing the plurality of segments into an ordered segment group; selecting one segment from the segment group as a current segment; parsing the content of the current segment to generate layout data; and generating a page image in accordance with the layout data. US 2008/301545 A1 discloses a similar method.

### SUMMARY

Accordingly, the present disclosure is designed to provide a method, a terminal and an electronic device for processing e-book documents, such that the mobile terminal, when reading an e-book, may have a shortened reading time and a reduced memory usage.

According to a first aspect of the embodiments of the present disclosure, there is provided a method for processing an e-book document, including:
obtaining an e-book document;
dividing content of the e-book document into a plurality of segments in accordance with a preset segmentation manner;
composing the plurality of segments into an ordered segment group;
selecting one segment from the segment group as a current segment;
parsing the content of the current segment to generate layout data; and
generating a page image in accordance with the layout data, wherein generating a page image comprises performing a paging process on the layout data to generate a page layout frame, generating a page object according to the page layout frame and the layout data and rendering the page object to generate the page image; and wherein if a page number, corresponding to a request point, is not obtained during the page object generating process, then a temporary parsing process is executed to obtain the requested page; the temporary parsing process comprising identifying a request segment corresponding to the request point, creating a parsing state interval of the e-book document to be used to perform paging for the request segment, calling a layout driving process, and generating the temporary parsing page space to obtain the page number corresponding to the request point.

In the embodiments of the present disclosure, the e-book document is divided into a plurality of segments. Each time when operating an e-book, only one segment of the e-book document is parsed, and the layout data generated from the segment is used to generate a page image, therefore the data amount to be processed during operation each time is only the data amount of one segment. In this way, when the mobile terminal reads the e-book document, the data processing efficiency may be raised, thereby shortening the time to read the e-book. Moreover, segmentation operation may have the e-book document to be processed in batches, when the mobile terminal processes one segment of the e-book document, the data amount to be processed either in parsing operation or in subsequent page image generation operation are relatively small, thus reducing the memory of the mobile terminal occupied by the e-book.

In one embodiment, after the generating the layout data, the method further includes:
recording position information of the current segment in the segment group; and
judging whether data amount of the layout data is less than a preset value, if the data amount is less than the preset value, selecting a next segment of the current segment according to the position information, using the next segment as the current segment, and returning to the parsing the content of the current segment.

The present solution ensures the data amount of the layout data to be enough for generating a page image.

In one embodiment, the dividing the content of the e-book document into the plurality of segments includes sub-steps of:
determining a segment size; and
dividing the content of the e-book document into the plurality of segments having the same size as the segment size.

The present solution achieves the particular manners of segmentation.

In one embodiment, the method further includes:
judging whether information of a start point of the segment is complete, and if it is not complete, moving from the start point of the segment to a last segment to determine a start point of the information, and using the start point of the information as the start point of the segment and an end point of the last segment.

The present solution avoids one piece of complete information from being divided into two segments, and further divides the start point and end point of the segment accurately.

In one embodiment, the method further includes:
judging whether information of a start point of the segment is complete, and if it is not complete, moving from the start point of the segment to an end point of the segment to determine an end point of the information, and using the end point of the information as the start point of the segment and an end point of a last segment.

The present solution avoids one piece of complete information from being divided into two segments, and further divides the start point and end point of the segment accurately.

In one embodiment, the method further includes:
judging whether information of an end point of the segment is complete, and if it is not complete, moving from the end point of the segment to a next segment to determine an end point of the information, and using the end point of the information as the end point of the segment and a start point of the next segment.

The present solution avoids one piece of complete information from being divided into two segments, and further divides the start point and end point of the segment accurately.

In one embodiment, the method further includes:
judging whether information of an end point of the segment is complete, and if it is not complete, moving from the end point of the segment to a start point of the segment to determine a start point of the information, and using the start point of the information as the end point of the segment and a start point of a next segment.

The present solution avoids one piece of complete information from being divided into two segments, and further divides the start point and end point of the segment accurately.

In one embodiment, the method further includes:
judging whether layout atomic data contained in the layout data is used within a preset time period, and if it is not used, deleting the layout atomic data.

The present solution may save the memory of the mobile terminal.

In one embodiment, the method further includes:
judging whether memory occupied by layout atomic data contained in the layout data is greater than a preset value, and if it is greater than the preset value, deleting the layout atomic data.

The present solution may save the memory of the mobile terminal.

According to a second aspect of the embodiments of the present disclosure, there is provided a terminal, including:
an obtaining module configured to obtain an e-book document;
a segmentation module configured to divide content of the e-book document into a plurality of segments in accordance with a preset segmentation manner;
a composing module configured to compose the plurality of segments into an ordered segment group;
a selecting module configured to select one segment from the segment group as a current segment;
a parsing module configured to parse the content of the current segment to generate layout data; and
a generating module configured to generate a page image in accordance with the layout data, wherein the generating module is further configured to perform a paging process on the layout data to generate a page layout frame, to generate a page object according to the page layout frame and the layout data and to render the page object to generate the page image; and wherein the generating module is further configured to execute a temporary parsing process to obtain the requested page if a page number, corresponding to a request point, is not obtained during the page object generating process; the temporary parsing process comprising identifying a request segment corresponding to the request point, creating a parsing state interval of the e-book document to be used to perform paging for the request segment, calling a layout driving process, and generating the temporary parsing page space to obtain the page number corresponding to the request point.

In one embodiment, the terminal further includes:
a recording module configured to record position information of the current segment in the segment group;
a first judging module configured to judge whether data amount of the layout data is less than a preset value; and
a first executing module configured to, when the data amount is less than the preset value, select a next segment of the current segment according to the position information, use the next segment as the current segment, then return to execute the parsing module.

In one embodiment, the segmentation module includes:
a segment size determining unit configured to determine a segment size; and
a dividing unit configured to divide the content of the e-book document into the plurality of segments having the same size as the segment size.

In one embodiment, the terminal further includes:
a second judging module configured to judge whether information of a start point of the segment is complete; and
a second executing module configured to, when the information of the start point of the segment is not complete, move forward from the start point of the segment to determine a start point of the information, and use the start point of the information as the start point of the segment.

In one embodiment, the terminal further includes:
a third judging module configured to judge whether information of a start point of the segment is complete; and
a third executing module configured to, when judging the information of the start point of the segment is not complete, move from the start point of the segment to an end point of the segment to determine an end point of the information, and use the end point of the information as the start point of the segment and an end point of a last segment.

In one embodiment, the terminal further includes:
a fourth judging module configured to judge whether information of an end point of the segment is complete; and
a fourth executing module configured to, when the information of the end point of the segment is not complete, move from the end point of the segment to a next segment to determine an end point of the information, and use the end point of the information as the end point of the segment and a start point of the next segment.

In one embodiment, the terminal further includes:
a fifth judging module configured to judge whether information of an end point of the segment is complete; and
a fifth executing module configured to, when the information of the end point of the segment is not complete, move from the end point of the segment to a start point of the segment to determine a start point of the information, and use the start point of the information as the end point of the segment and a start point of a next segment.

In one embodiment, the terminal further includes:
a sixth judging module configured to judge whether layout atomic data contained in the layout data is used within a preset time period; and
a sixth executing module configured to delete the layout atomic data when the layout atomic data is not used within the preset time period.

In one embodiment, the terminal further includes:
a seventh judging module configured to judge whether memory occupied by layout atomic data contained in the layout data is greater than a preset value; and
a seventh executing module configured to delete the layout atomic data when the memory occupied by the layout atomic data is greater than the preset value.

In portions of the present disclosure, there is also provided an electronic device, including a memory and one or more programs, wherein the one or more programs are stored in the memory and are configured to be executed by one or more processors, the one or more programs comprise instructions for performing operations of the methods described above.

According to a fourth aspect of the embodiments of the present disclosure, there is also provided a program product having stored therein instructions that, when executed by one or more processors of a terminal, causes the terminal to perform:
obtaining an e-book document;
dividing content of the e-book document into a plurality of segments in accordance with a preset segmentation manner;
composing the plurality of segments into an ordered segment group;
selecting one segment from the segment group as a current segment;
parsing the content of the current segment to generate layout data; and
generating a page image in accordance with the layout data, wherein generating a page image comprises performing a paging process on the layout data to generate a page layout frame, generating a page object according to the page layout frame and the layout data and rendering the page object to generate the page image; and wherein if a page number, corresponding to a request point, is not obtained during the page object generating process, then a temporary parsing process is executed to obtain the requested page; the temporary parsing process comprising identifying a request segment corresponding to the request point, creating a parsing state interval of the e-book document to be used to perform paging for the request segment, calling a layout driving process, and generating the temporary parsing page space to obtain the page number corresponding to the request point.

The above and other features and advantages of the embodiments of the present disclosure will be described in the following description and partially become more apparent therefrom or be understood by implementing the embodiments of the present disclosure. The features and advantages of the embodiments of the present disclosure may be implemented and obtained by the structures prescribed in the written description, the claims and the accompanying drawings.

It is to be understood that both the foregoing general description and the following detailed description are exemplary only and are not restrictive of the present disclosure. Embodiments which do not fall within the scope of the claims do not describe part of the present invention.

Hereinafter, technical solutions of the present disclosure are further described in detail by the accompanying drawings and embodiments.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is an exemplary flow chart showing a method for processing an e-book document provided by an embodiment of the present disclosure;
Fig. 2 is an exemplary flow chart showing another method for processing an e-book document provided by an embodiment of the present disclosure;
Fig. 3 is an exemplary flow chart showing still another method for processing an e-book document provided by an embodiment of the present disclosure;
Fig. 4 is an exemplary flow chart showing a method for processing a HTML document provided by an embodiment of the present disclosure;
Fig. 5 is a block diagram showing a terminal provided by an embodiment of the present disclosure;
Fig. 6 is a block diagram showing a segmentation module provided by an embodiment of the present disclosure;
Fig. 7 is a block diagram showing another terminal provided by an embodiment of the present disclosure;
Fig. 8 is a block diagram showing still another terminal provided by an embodiment of the present disclosure;
Fig. 9 is a block diagram showing yet still another terminal provided by an embodiment of the present disclosure;
Fig. 10 is a structural block diagram showing an electronic device provided by an embodiment of the present disclosure.

### DETAILED DESCRIPTION

Currently, the process that a mobile terminal reads an e-book document may include the following steps: a parsing step of parsing the e-book document into layout data by the mobile terminal; a full paging step of performing a full paging process to the above layout data to obtain a page frame; a page object generating step of generating a corresponding page object by using the page frame and the layout data; and a page image generating step of generating a page image by rendering the page object. After processing the above steps, a user may view the page image of the e-book by the mobile terminal.

In order to implement better reading of the e-book documents by the mobile terminal, the embodiments of the present disclosure provide a method, a terminal and an electronic device for processing an e-book document, such that the mobile terminal, when reading an e-book, may have a short reading time and a reduced memory usage. The above method, the terminal and the electronic device for processing an e-book document may have many specific implementations, and the detailed description thereof will be given through specific embodiments as below.

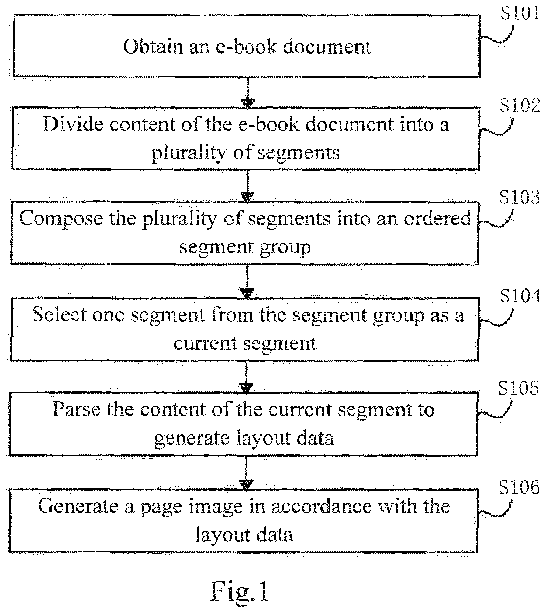

Referring to Fig. 1, which illustrates a method for processing an e-book document, the method includes the following steps.

In step 101, an e-book document is obtained.

After a user opening an e-book through a mobile terminal, the mobile terminal may read the e-book document into an internal memory, and at this time, the mobile terminal obtained the e-book document.

In the embodiments of the present disclosure, the e-book document may be a streaming e-book document. The streaming e-book document described here means that the described information, such as characters and pictures, has no fixed layout position, and when layout parameters (such as layout width, font size and line spacing) change, the layout needs to be rearranged to adapt the e-book document with new layout parameters. The streaming e-book document includes a document containing a HTML document, wherein the HTML document consists of labels, thereby the mobile terminal may also obtain the labels constituting the HTML document while obtaining the HTML document of the e-book.

In step 102, content of the e-book document is divided into a plurality of segments in accordance with a preset segmentation manner.

The preset segmentation manner may have many implementing forms, for example, determining a segment size, and dividing the content of the e-book document into a plurality of segments having the same size as the segment size. Specifically, the segment size represents the size of each segment after the e-book document is divided, so the segment size may be set in advance, or may be set by a user of the mobile terminal himself, or may be calculated according to experiments.

In step 103, the plurality of segments are composed into an ordered segment group.

After dividing the e-book document by the above steps, the e-book document is divided into a plurality of segments. In order to ensure the data to be processed according to an order of the content of the original e-book document, a connection between segments needs to be established, so as to compose the segments into one segment group according to the original order.

In step 104, one segment is selected from the segment group as a current segment.

Any segment in the segment group may be selected according to the user's requirements, so as to facilitate the subsequent steps to process the selected segment.

In step 105, the content in the current segment is parsed to generate layout data.

The content in a certain segment is only a portion of the content of the whole e-book document, the data needs to be parsed is much less than the content of the whole e-book document, thereby the parsing speed is much faster. Moreover, since the data amount is reduced, the occupied memory is enormously reduced.

In addition, after generating the layout data, in order to save the memory of the mobile terminal, the method may include steps of: judging whether layout atom data contained in the layout data is used within a preset time period, and if it is not used, deleting the layout atom data. If the layout data is not used for a long time, in order to save the memory occupied by the layout data, the layout atom data may be deleted, and may be regenerated if needed later.

In addition, after generating the layout data, in order to save the memory of the mobile terminal, the method may include steps of: judging whether memory occupied by layout atom data contained in the layout data is greater than a preset value, and if it is greater than the preset value, deleting the layout atom data. If the layout data is too much, which may cause the processing speed of the subsequent steps too slow, then the whole layout data may be deleted, or a preset amount of the layout data may be deleted.

In step 106, a page image is generated in accordance with the layout data.

The data amount of the layout data is generated by one segment, so the data amount of the layout data is relatively small. Therefore, in a process of generating the page image, the occupied time and the occupied memory are both reduced greatly.

In step 106, the method may further includes three steps of: 1) performing a paging process to the layout data to generate a page layout frame; 2) generating a page object according to the page layout frame and the layout data; and 3) rendering the page object to generate the page image.

In the embodiment shown in Fig. 1, the e-book document is divided into a plurality of segments. Each time when operating an e-book, only one segment of the e-book document is parsed, and the layout data generated from the segment is used to generate a page image, therefore the data amount to be processed during operation each time is only the data amount of one segment. In this way, when the mobile terminal reads the e-book document, the data processing efficiency may be raised, thereby shortening the time to read the e-book. Moreover, segmentation operation may have the e-book document to be processed in batches, when the mobile terminal processes one segment of the e-book document, the data amount to be processed either in parsing operation or in subsequent page image generation operation are relatively small, thus reducing the memory of the mobile terminal occupied by the e-book.

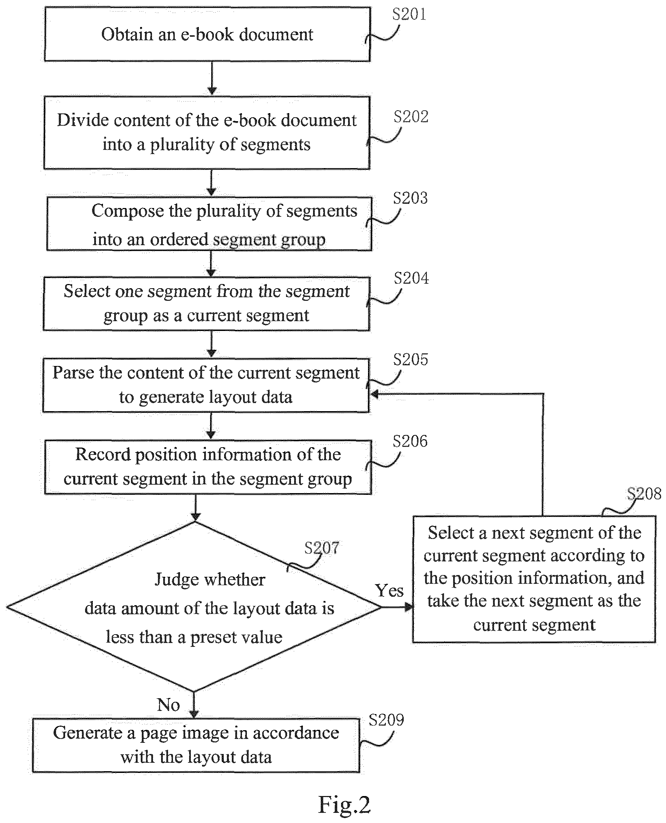

Referring to Fig. 2, which shows another method for processing an e-book document, the method includes the following steps.

In step 201, an e-book document is obtained.

After a user opening an e-book through the mobile terminal, the mobile terminal may read the e-book document into an internal memory, and at this time, the mobile terminal obtained the e-book document. In the embodiments of the present disclosure, the e-book document may be a HTML document. The HTML document consists of labels, thereby the mobile terminal may also obtain the labels constituting the HTML document while obtaining the HTML document of the e-book.

In step 202, the content of the e-book document is divided into a plurality of segments in accordance with a preset segmentation manner.

The preset segmentation manner may have many implementing forms. One segmentation method is introduced hereinafter, which is: determining a segment size, and dividing the content of the e-book document into a plurality of segments having the same size as the segment size. Specifically, the segment size represents the size of each segment after the e-book document is divided, so the segment size may be set in advance, or may be set by a user of the mobile terminal himself, or may be calculated according to experiments.

In step 203, the plurality of segments are composed into an ordered segment group.

After dividing the e-book document by the above steps, the e-book document is divided into a plurality of segments. In order to ensure the data to be processed according to an order of the content of the original e-book document, a connection between segments needs to be established, so as to compose the segments into one segment group according to the original order.

In step 204, one segment is selected from the segment group as a current segment.

Any segment in the segment group may be selected according to the user's requirements, so as to facilitate the subsequent steps to process the selected segment.

In step 205, the content in the current segment is parsed to generate layout data.

The content in a certain segment is only a portion of the content of the whole e-book document, the data needs to be parsed is much less than the content of the whole e-book document, thereby the parsing speed is much faster. Moreover, since the data amount is reduced, the occupied memory is enormously reduced.

In step 206, position information of the current segment in the segment group is recorded.

There are many ways for implementing the position information, for example, using bytes to record the position information, or using marks to record the position information. For the e-book document which is a HTML document, the position information of the segment may be recorded by using a byte offset. The unit of the byte offset is byte. The present disclosure does not limit the position information specifically, as long as it can record position of the segment in the segment group, which all may be within the scope of solution of the present disclosure.

In step 207, whether data amount of the layout data is less than a preset value is judged, if YES, step 208 is executed; and if NO, step 209 is executed.

The layout data is generated by parsing the current segment, and the data amount of the layout data generated by parsing each segment is a certain amount. If the data amount of the generated layout data is enough for generating a page image, then the layout data is used to generate a page image; and if the data amount of the generated layout data is not enough for generating a page image, it is needed to parse a next segment to generate the layout data, and combine the existing layout data and the layout data generated by the next segment together to generate the page image.

In step 208, a next segment of the current segment is selected according to the position information, the next segment is used as the current segment, and the procedure returns to step 205.

In step 206, the position information of the current segment has been recorded, thus the position information of the next segment may be determined based on the position information of the current segment, and thereby it is possible to select the content in the next segment. Then, the next segment is used as the segment to be processed currently, and the procedure returns to the step 205.

In step 209, a page image is generated in accordance with the layout data.

The data amount of the layout data is generated by one segment, so the data amount of the layout data is relatively small. Therefore, in a process of generating the page image, the occupied time or the occupied memory are both reduced greatly.

In the embodiment shown in Fig. 2, which is different from the embodiment shown in Fig. 1 in that: judging whether the data amount of the generated layout data is enough for generating a page image, if YES, then generating the page image according to the existing layout data; and if NO, parsing the next segment, and generating the page image by combining the existing layout data and the layout data generated by the next segment.

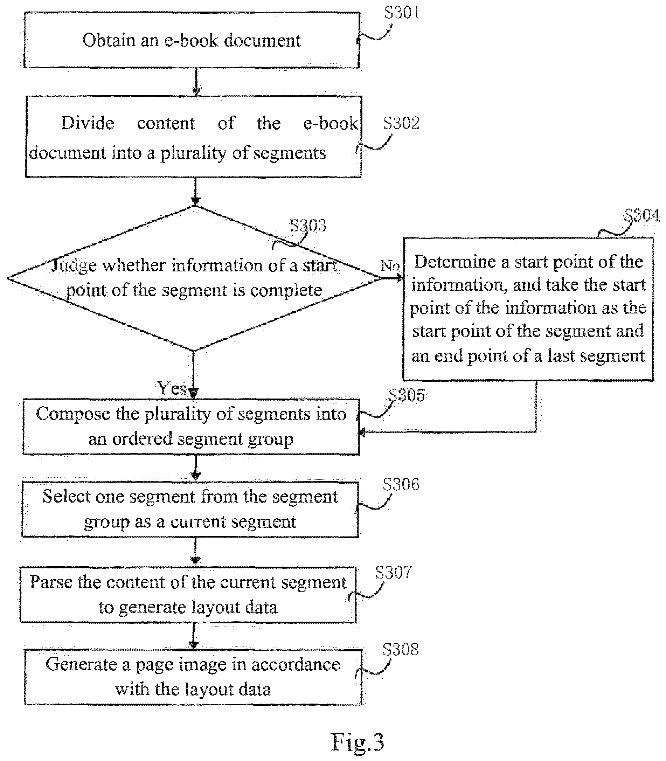

Based on the above embodiments, after the step of generating a plurality of segments, it is possible to accurately divide a start point and an end point of the segment. For example, when the e-book document is specifically a HTML document, the start point of the segment is a start position of the segment, and the end point of the segment is an end position of the segment. The HTML document consists of labels. The label consists of two angle brackets, namely, the label consists of a left angle bracket "<" and a right angle brackets ">", with the content of the label interposed between the two angle brackets. According to the syntax provisions of HTML, the label must include a left angle bracket "<" and a right angle bracket ">", thus the label is complete. Therefore, after the segmentation, an irregular situation that a certain segment only contains a left angle bracket or only contains a right angle bracket, is not allowed. If this happens, it means that one label is divided into two segments, which causes the label unable to be parsed subsequently. In order to further divide the start point and the end point of the segment, please refer to the embodiment in Fig. 3.

Referring to Fig. 3, which shows still another method for processing an e-book document, the method includes the following steps.

In step 301, an e-book document is obtained.

After a user opening an e-book through the mobile terminal, the mobile terminal may read the e-book document into an internal memory, and at this time, the mobile terminal obtained the e-book document. In the embodiments of the present disclosure, the e-book document may be a HTML document. The HTML document consists of labels, thereby the mobile terminal may also obtain the labels constituting the HTML document while obtaining the HTML document of the e-book.

In step 302, content of the e-book document is divided into a plurality of segments in accordance with a preset segmentation manner.

The preset segmentation manner may have many implementing forms. One segmentation method is introduced hereinafter, which is: determining a segment size, and dividing the content of the e-book document into a plurality of segments having the same size as the segment size. Specifically, the segment size represents the size of each segment after the e-book document is divided, so the segment size may be set in advance, or may be set by a user of the mobile terminal himself, or may be calculated according to experiments.

In step 303, whether information of a start point of the segment is complete is judged, if YES, then step 305 is executed; and if NO, step 304 is executed.

After the segmentation, in order to avoid one piece of complete information from being divided into two segments, it is needed to judge whether the information of the start point of the segment is complete, and if it is not complete, it is needed to make a slight adjustment to the start point and the end point of the segment, so as to ensure that the information in each segment is complete.

In step 304, a start point of the information is determined by moving from the start point of the segment to the last segment, and the start point of the information is used as the start point of the segment and the end point of the last segment.

If the information of the start point of the segment is not complete, it means that the first half of the information is assigned into the last segment, while the last half of the information stays at the start point of the segment. In order to ensure that the information is complete, there are many implementation manners, wherein one implementation manner is the adjusting manner of step 304, which is to delete the first half of the information in the last segment, and supplement the first half of the information to the start point of the segment, wherein the start point of the segment and the end point of the last segment is the same point. Specifically, the second implementation manner is moving from the start point of the segment to the end point of the segment to determine an end point of the information, and using the end point of the information as the start point of the segment and the end point of the last segment. The second manner is to delete the last half of the information in the segment, and supplement the last half of the information to the end point of the last segment. The above-mentioned two manners can both perform the slight adjustment to the start point and the end point of each segment, such that the information in each segment is complete.

Certainly, in order to ensure that the information in the segment is complete, other than applying the manner of step 304, it may also be possible to determine the start point of other information as the start point of the segment and the end point of the last segment. Although in this manner, the offset of the start point or the end point of the segment may be too much, it may still solve the problem of incomplete information. Therefore, the embodiment provided by the present disclosure is not limited to the manner of step 304. Other methods having the same principles as that of the step 304, as long as being capable of achieving the purpose of complete information, may be also applicable, which are not limited specifically herein.

In step 305, the plurality of segments are composed into an ordered segment group.

After dividing the e-book document by the above steps, the e-book document is divided into a plurality of segments. In order to ensure the data to be processed according to an order of the content of the original e-book document, a connection between segments needs to be established, so as to compose the segments into one segment group according to the original order.

In step 306, one segment is selected from the segment group as a current segment.

Any segment in the segment group may be selected according to the user's requirements, so as to facilitate the subsequent steps to process the selected segment.

In step 307, the content in the current segment is parsed to generate layout data.

The content in a certain segment is only a portion of the content of the whole e-book document, the data needs to be parsed is much less than the content of the whole e-book documents, thereby the parsing speed is much faster. Moreover, since the data amount is reduced, the occupied memory is enormously reduced.

In step 308, a page image is generated in accordance with the layout data.

The data amount of the layout data is generated by one segment, thus the data amount of the layout data is relatively small. Therefore, in a process of generating the page image, the occupied time and the occupied memory are both reduced greatly.

In the embodiment shown in Fig. 3, in order to avoid one piece of complete information from being divided into two segments, it is also possible to judge whether the information of the end point of the segment is complete. Specifically, there are two method of implementation. The first method includes: judging whether the information of the end point of the segment is complete, and if it is not complete, moving from the end point of the segment to the next segment to determine an end point of the information, and using the end point of the information as the end point of the segment and the start point of the next segment. The second method includes: judging whether the information of the end point of the segment is complete, and if it is not complete, moving from the end point of the segment to the start point of the segment to determine a start point of the information, and using the start point of the information as the end point of the segment and the start point of the next segment. The principle of those methods is similar to that of steps 303 and 304, for details please refer to the explanation for steps 303 and 304, which are not described repeatedly.

In the embodiment shown in Fig. 3, which is different from the embodiment shown in Fig. 1 in that, in order to avoid one piece of complete information from being divided into two segments, the start point and end point of the segment is further divided accurately.

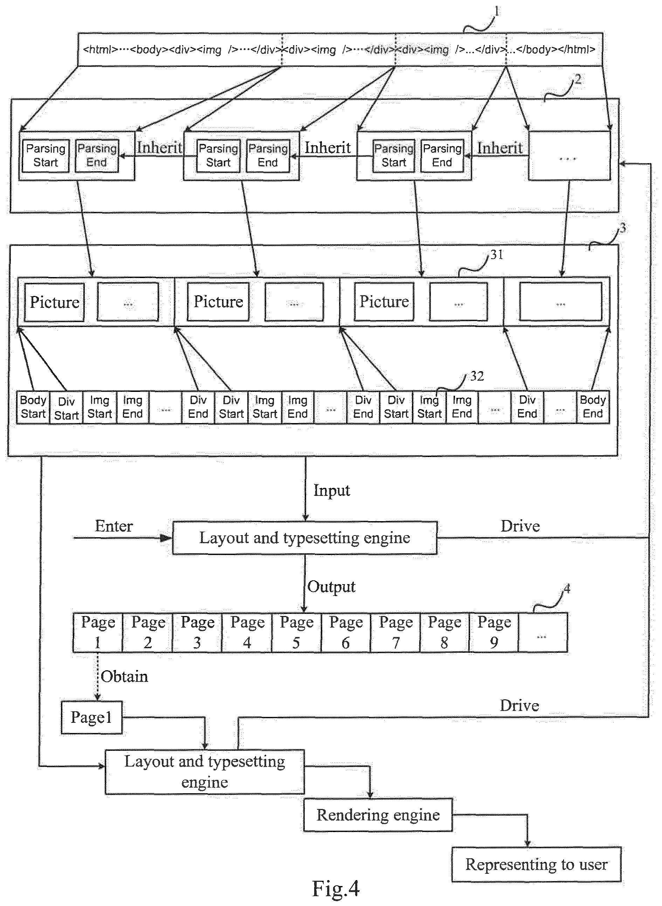

Referring to Fig. 4, which shows a specific application example provided by the present disclosure, this application example introduces a specific processing method in the case that the e-book document is a HTML document 1, wherein the method for processing the HTML document 1 includes the following steps.

In a first step, a HTML document 1 is obtained.

In a second step, content of the HTML document 1 is divided into a plurality of HTML segments according to a preset segmentation manner.

In the second step, the greatest feature of the process of parsing the HTML document 1 is to parse the HTML segment, and the time spent in parsing a small HTML segment is acceptable. If only one small HTML segment is processed during each parsing process, single parsing time may be shortened. Therefore the HTML document is parsed in segments herein.

It is needed firstly to determine a size value m of the segment (unit: B (byte)); then uniformly divide the HTML document 1 with a size of n (unit: B (byte)) into n/m pieces according to the value m, thus obtaining (n/m-1) breakpoints. Since completeness of the labels in the HTML document 1 must be ensured when parsing the HTML document 1 from a non-starting point, so as to prevent half label from appearing in the HTML segment, it is needed to examine in turn whether every breakpoint of the above (n/m-1) breakpoints satisfies the requirement of not being within a HTML label. According to the syntax provisions of HTML, the label must be bracketed by a left angle bracket "<" and a right angle bracket ">", with a length generally within 1024B. According to the above restriction, it is possible to inquire forward or backward a certain bytes for each point in the above (n/m-1) breakpoints to satisfy the requirement of not being within the HTML label.

Specifically, there are many ways for determining the size value m of the segment, for example, an artificially setting way, or a calculating way. The introduction with focus on the calculating way for determining the size value m of the segment will be given below.

### 1. Theoretical analysis

Since the parsing time of the HTML document 1 is decided directly by a number of HTML nodes, as the HTML document 1 is gradually increasing, the number of the HTML nodes is also increasing, and the time spending on deeply traversing the nodes will gradually increase. Therefore, a curve of the parsing time of the HTML document 1 varying with the size of the HTML document 1 is a forward ascending curve. Generally, when the HTML document 1 is small, the number of the HTML nodes is less. For the modern computers, the parsing of the HTML document 1 can realize the deep traversal in a very short time (for example, for the HTML document 1 of 10K and 50K, the parsing times of both may have little difference); and when the size of the HTML document reaches a certain level, the number of the HTML nodes may have a non-linear dramatic growth, thereby causing the parsing time of the HTML document 1 to grow non-linearly. In summary of the foregoing analysis, it can be seen that the parsing time of the HTML document 1 varying with the size of the HTML document 1 is a course firstly lower and then higher, thus there is an inflection point in the curve. When the size of the HTML document 1 reaches the inflection point, the parsing efficiency of the HTML document 1 declines sharply.

### 2. Theoretical verification

The parsing performance test is performed to several groups of HTML physical spaces that have been prepared previously by using some common performance analysis means, the test results of each group are recorded, and then a curve of parsing time of the HTML document varying with a size of the HTML document 1 is plotted by using a visualization tool, thus the above theoretical analysis is verified.

### 3. Searching an inflection point of the parsing performance of the HTML document 1

Through the curve of the parsing time of the HTML document 1 varying with the size of the HTML document 1 after the above theoretical verification, it can be determined that when the size of the HTML document 1 is smaller than a certain value M, the parsing times of the HTML document substantially have little variation, while when the physical space of the HTML is greater than a certain value N, the parsing time of the HTML document may increase sharply. Accordingly, the size of the HTML document 1 corresponding to the inflection point of the parsing performance of the HTML document 1 may be determined within an interval [M, N]. Then, an analysis within the interval [M, N) is performed; and at this time, there are two criteria to be considered: a) it is inappropriate to divide the HTML document 1 into too many segments, otherwise the complexity of the segment managements may increase, i.e., the size value m of the segment can not be too small; b) it is inappropriate that the parsing time for a single HTML segment is too long, otherwise there may be disadvantages such as the user waits too long, i.e., the size value m of the segment can not be too large. The minimum value M and the maximum value N in the interval [M, N] may be removed according to the above two criteria to obtain a new interval, then the minimum value and the maximum value in the new interval may be removed again according to the above two criteria. By repeating the above operation in turn, if one value is remained finally, this value is used as the size of the HTML document 1 corresponding to the performance inflection point (i.e., the size value m of the segment); and if two values are remained finally, then a middle value between the two values is used as the size of the HTML document 1 corresponding to the performance inflection point (i.e., the size value m of the segment).

In a third step, the plurality of segments are composed into an ordered segment group.

The biggest drawback of the parsing process is that it is unable to be backtracked, that is, the parsing has to be executed according to the physical order of the HTML document 1. If starting a parsing from a non-starting point of the HTML document 1, the HTML document 1 may have incomplete contexts, which causes the problems such as losing label nodes. Therefore, parsing the state interval 2 of the HTML document 1 is used herein to overcome the problem.
1. A parser for the HTML document 1 is newly created. At this time, the state of the parser is not parsed by any of the HTML document 1, which is called as the initial parsing state. The initial parsing state is not relevant to the specific HTML document 1, and any newly created parser for the HTML document 1 may be in the initial parsing state.
2. Since the parsing state of the HTML document 1 may record a byte offset in the HTML document 1, while the segmentation result of the HTML document 1 is also described by using the byte offset, one to one correspondence between the HTML segment and the parsing interval may be established according to this corresponding relationship of the byte offset. Therefore, the first HTML segment corresponds to the first parsing interval, the parsing start state thereof (the byte offset is where the first segment starts) is taken as the initial parsing state, and the parsing end state thereof is a state after the parsing of the first HTML segment is finished (the byte offset is where the first segment ends).
3. For the parsing interval corresponding to each HTML segment following the first HTML segment, the parsing start state thereof inherits the parsing end state of the last parsing interval, and the parsing end state thereof is a state after the parsing of this HTML segment is finished. The inheriting of the parsing state is a clone process of the parsing state, namely, copying intactly the byte offset of the HTML document 1 where one parsing state locates (for recording current position of the parsing state in the HTML document 1), the stack information of the father HTML label node (for recording the path that the parsing state passes in the HTML document 1), the context relationship when parsing (for recording the context relationship that the parsing state within the text nodes of the HTML document 1) and the like into another parsing state.

According to this scheme, each HTML segment, when taking part in the parsing process of the HTML document 1, inherits the parsing state of the last HTML segment, i.e., inherits the context relationship of the last HTML segment, thereby the problem caused by the incomplete context relationship is overcome.

In a fourth step, one segment is selected from the segment group as a current segment.

In a fifth step, content of the current segment is parsed to generate layout data 3.

The layout driving process is as follows:
1. A layout engine is started up. When layout atom data 31 corresponding to the current HTML segment is found as null, a HTML segment that a point in the current layout locates is searched according to the offset of the HTML document 1 corresponding to the point, a parsing interval of the corresponding HTML document 1 is awaked, and the corresponding HTML segment is interpreted, thus generating the corresponding label node data 32 and the layout atom data 31. For the label node data 32, since the layout atom data 31 depends on fashion information of the label node data 32, along with the parsing of the layout atom data 31, the label node data 32 is parsed accordingly. The label node data 32 only needs to be saved for one copy, and if it is found that the label node data 32 corresponding to the HTML segment already exists, no corresponding label node data 32 is added into the parsing process.
2. The layout is performed to finish the paging or the page object generation. Meanwhile, the usage situation of the current storage resources is monitored, if being greater than the specified threshold value (for example, the application memory of the android platform is generally limited within 24MB, and the application of the iOS platform is generally limited within 20M), the layout atom data 31 corresponding to the temporarily unused HTML segment is deleted.

In sixth step, a page image is generated according to the layout data 3.

The full HTML paging process is as follows:
The full paging process is performed from the very start of the HTML physical space, calling the layout driving process for every HTML segment sequentially from front to back. For every HTML segment, when the paging process reaches the last page of the segment, a case of half a page may occur. In order to ensure that the last page of the current segment is consecutive with the next segment, at this time the HTML data of the next segment is parsed immediately, then paging is performed from the start point of the last page of the current segment. If the layout atomic is found to be inadequate, then the layout atomic of the next segment is used to avoid fracture problems between segments.

The page object generating process is as follows:
1. Through the byte offset of the HTML document 1 (hereinafter referred to as a "request point"), the page number in the HTML page space 4 corresponding thereto (the start point and the end point of the HTML page may record the byte offset in the physical HTML) is determined. At this time, there may be two situations: the page number is obtained and the page number is not obtained. If the page number is obtained, it means that the full paging process has reached to the request point, then the full paging result corresponding to the page number is used; and if the page number is not obtained, it means that the full paging process does not yet reach the request point, at this time a temporary parsing process is started up to obtain the paging result corresponding to the request point.
2. According to the above obtained paging result, a layout driving process is called, and the page object generation is finished.

The temporary parsing process is as follows:
1. The HTML segment where the request point locates (hereinafter referred to as the "request segment") is judged according to the request point; a parsing state interval 2 of the HTML document 1 is newly created, the parsing start state thereof is taken as the initial parsing state, and the parsing end state is taken as a state of the request segment after being parsed by using the parsing start state.
2. The layout driving process is called, the parsing state interval 2 in the above step is forced to be used to perform paging for the request segment, and the temporary parsing page space 4 is generated.
3. The page number of the request point in the temporary parsing page space 4 is determined according to the request point, and the temporary parsing page result is obtained according to the page number.

Note: when the full paging process does not yet reach an interval where the required page locates, the temporary parsing process is used to obtain the required page. At this time, although the complete HTML context relationship is not used, after the full paging process reaches the required page, it turns to the full paging result to correct the problem of parsing the HTML from the non-starting point. When the HTML full paging process is not yet finished, it is unallowable to jump to the next one by using the page number, for a reason that the page number may exceed the number that the full paging process has paged. At this time, it is able to jump to the next one according to the percentage of the HTML physical space size. After the full paging is finished, it is able to jump to the next one by using the page number.

The solution provided by the present disclosure makes the HTML document 1 with a big size occupies a smaller memory space during the full paging process, and reduces the obtaining time of the full paging result in the front part of the HTML document 1. A temporary parsing is used prior to the full paging reaching the space, thereby the HTML jumping performance is improved, and the problem likely existing in the temporary parsing is corrected after the full paging reaches the space.

This may bring the following beneficial effects for user experiences:
1. The parsing time and the full paging time of the HTML document are apportioned to each HTML segment, the waiting time of the first page is evidently shortened when the user opens an e-book mainly with the HTML document 1 having a big size;
2. After the full paging reaches the request point, the full paging result is used, so as to ensure that the book fashion structure is not ruined when the user reads the e-book mainly with the HTML document 1 having a big size, and the content is presented to the user in a form of most respecting the original book;
3. A smaller memory space is occupied, thus a crash probability when the user opens the e-book mainly with the HTML document 1 having a big size on an apparatus having less storage resources, such as a mobile device, is evidently reduced;
4. A smaller memory space is occupied, thus the reading software is operated more fluently when the user reads the e-book mainly with the HTML document 1 having a big size, and the fluency of the user operation is improved;
5. The temporary parsing process is adopted, thus the waiting time for synchronizing a reading progress is evidently shortened when the user reads the e-book mainly with the HTML document 1 having a big size;
6. The temporary parsing process is adopted, thus the waiting time for the catalog jumping is evidently shortened when the user reads the e-book mainly with the HTML document 1 having a big size;
7. The temporary parsing process is adopted, thus the waiting time for fast advancing or fast rewinding is evidently shortened when the user reads the e-book mainly with the HTML document 1 having a big size.

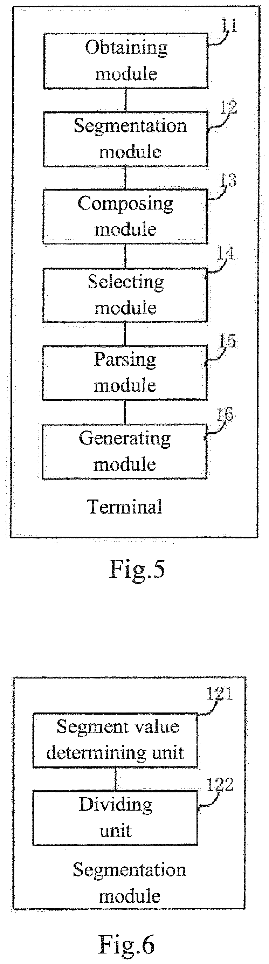

Fig. 5 shows a terminal including: an obtaining module 11 configured to obtain an e-book document; a segmentation module 12 configured to divide the content of the e-book document into a plurality of segments in accordance with a preset segmentation manner; a composing module 13 configured to compose the plurality of segments into an ordered segment group; a selecting module 14 configured to select one segment from the segment group as a current segment; a parsing module 15 configured to parse the content of the current segment to generate layout data; and a generating module 16 configured to generate a page image in accordance with the layout data. Fig. 6 shows a detailed structure of the segmentation module 12 including a segment size determining unit 121 and a dividing unit 122, wherein the segment size determining unit 121 is configured to determine a segment size; and the dividing unit 122 is configured to divide the content of the e-book document into a plurality of segments having the same size as the segment size.

In the embodiment shown in Fig. 5, the segmentation module 12 is used to divide the e-book document into a plurality of segments. Each time when operating an e-book, the parsing module 15 only parses one segment of the e-book document, and the generating module 16 generates the page image by using the layout data generated from the segment, therefore data amount to be processed during operation each time is only the data amount of one segment. In this way, when the mobile terminal reads the e-book document, the data processing efficiency may be raised, thereby shortening the time to read the e-book. Moreover, the segmentation operation may have the e-book document to be processed in batches, and when the mobile terminal processes one segment of the e-book document, the data amount to be processed either in the parsing operation or in the subsequent page image generation operation are relatively small, thus reducing the memory of the mobile terminal occupied by the e-book.

In the embodiment shown in Fig. 6, the segment size obtained by the segment size determining unit 121 is used to represent the size of each segment after the e-book document is divided. The segment size may be set in advance, or may be set by a user of the mobile terminal himself, or may be calculated according to experiments. Then, the dividing unit 122 is used to divide the e-book document according to the obtained segment size.

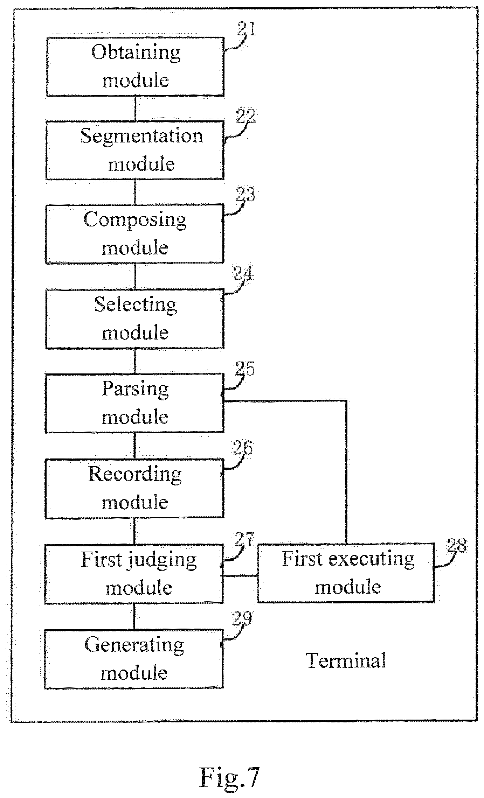

Referring to Fig. 7, which shows another terminal, the terminal includes: an obtaining module 21 configured to obtain an e-book document; a segmentation module 22 configured to divide content of the e-book document into a plurality of segments in accordance with a preset segmentation manner; a composing module 23 configured to compose the plurality of segments into an ordered segment group; a selecting module 24 configured to select one segment from the segment group as a current segment; a parsing module 25 configured to parse the content of the current segment to generate layout data; a recording module 26 configured to recording position information of the current segment in the segment group; a first judging module 27 configured to judge whether data amount of the layout data is less than a preset value; a first executing module 28 configured to, when the data amount is less than the preset value, select a next segment of the current segment according to the position information as the current segment, then return to execute the parsing module 25; and a generating module 29 configured to generate a page image in accordance with the layout data.

In the embodiment shown in Fig. 7, which is different from the embodiment shown in Fig. 6 in that, whether the data amount of the generated layout data is enough to generate the page image is judged by the first judging module 27, if YES, the page image is generated according to the existing layout data; and if NO, the next segment is parsed, and the existing layout data and the layout data generated by the next segment are combined together to generate the page image.

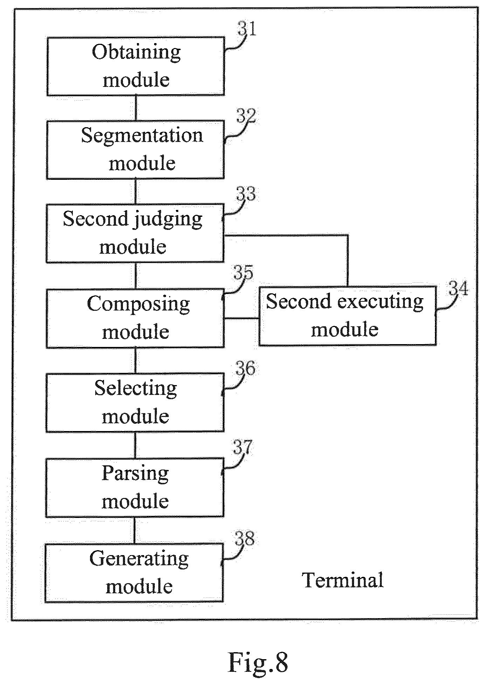

Referring to Fig. 8, which shows still another terminal, the terminal includes: an obtaining module 31 configured to obtain an e-book document; a segmentation module 32 configured to divide content of the e-book document into a plurality of segments in accordance with a preset segmentation manner; a second judging module 33 configured to judge whether information of a start point of the segment is complete; a second executing module 34 configured to move forward from the start point of the segment to determine the start point of the label when the information of the start point of the segment is not complete, and use the start point of the label as the start point of the segment; a composing module 35 configured to compose the plurality of segments into an ordered segment group; a selecting module 36 configured to select one segment from the segment group as a current segment; a parsing module 37 configured to parse the content of the current segment to generate layout data; and a generating module 38 configured to generate a page image in accordance with the layout data.

In the embodiment shown in Fig. 8, which is different from the embodiment shown in Figure 5 in that, in order to avoid one piece of complete information from being divided into two segments, the start point and end point of the segment is further divided accurately.

In the embodiment shown in Fig. 8, there are three implementation ways that may be replace equivalently the functions of the second judging module 33 and the second executing module 34 as described above. The three implementation ways are introduced briefly as below. The first replacing way is replacing the second judging module 33 by using a third judging module, and replacing the second executing module 34 by using the third executing module. Specifically, the third judging module is configured to judge whether the information of the start point of the segment is complete; and the third executing module is configured to, when judging the information of the start point of the segment is not complete, move from the start point of the segment to the end point of the segment to determine an end point of the information, and use the end point of the information as the start point of the segment and the end point of the last segment. The second replacing way is replacing the second judging module 33 by using a fourth judging module, and replacing the second executing module 34 by using a fourth executing module. Specifically, the fourth judging module is configured to judge whether the information of the end point of the segment is complete; and the fourth executing module configured to, when the information of the end point of the segment is not complete, move from the end point of the segment to the next segment to determine an end point of the information, and use the end point of the information as the end point of the segment and the start point of the next segment. The third replacing way is replacing the second judging module 33 by using a fifth judging module, and replacing the second executing module 34 by using a fifth executing module. Specifically, the fifth judging module is configured to judge whether the information of the end point of the segment is complete; and the fifth executing module is configured to, when the information of the end point of the segment is not complete, move from the end point of the segment to the start point of the segment to determine a start point of the information, and use the start point of the information as the end point of the segment and the start point of the next segment.

In the embodiment shown in Fig. 8, in order to ensure that the information in the segment is complete, it is not only possible to apply functions of the second judging module 33 and the second executing module 34, but also to determine the start point of other information as the start point of the segment and the end point of the last segment. Although in this way, the offset of the start point or the end point of the segment may be too much, it may still solve the problem of incomplete information. Therefore, the embodiment provided by the present disclosure is not limited to the way shown in Fig. 8. Other modules having the same functions and principles as that of the second judging module 33 and the second executing module 34, as long as being capable of implementing information completion, may be also applicable, which are not limited specifically herein.

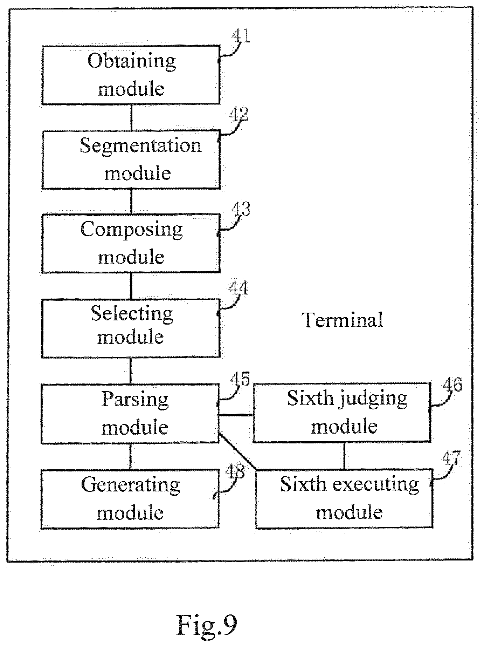

Referring to Fig. 9, which shows still another terminal, the terminal includes: an obtaining module 41 configured to obtain an e-book document; a segmentation module 42 configured to divide content of the e-book document into a plurality of segments in accordance with a preset segmentation manner; a composing module 43 configured to compose the plurality of segments into an ordered segment group; a selecting module 44 configured to select one segment from the segment group as a current segment; a parsing module 45 configured to parse the content of the current segment to generate layout data; a sixth judging module 46 configured to judge whether layout atom data contained in the layout data is used within a preset time period; a sixth executing module 47 configured to delete the layout atom data when the layout atom data is not used within the preset time period; and a generating module 48 configured to generate a page image in accordance with the layout data.

In the embodiment shown in Fig. 9, after the parsing module 45 generating the layout data, in order to save the memory of the mobile terminal, it may be implemented by using the sixth judging module 46 and the sixth executing module 47. If the layout data is not used for a long time, in order to save the memory occupied by the layout data, the layout atom data may be deleted, and may be regenerated if needed later.

In the embodiment shown in Fig. 9, after the parsing module 45 generating the layout data, in order to save the memory of the mobile terminal, it may be implemented by using the seventh judging module to replace the sixth judging module 46, and using the seventh executing module to replace the sixth executing module 47. Specifically, the seventh judging module is configured to judge whether memory occupied by the layout atomic data contained in the layout data is greater than a preset value; and a seventh executing module configured to delete the layout atomic data when the memory occupied by the layout atomic data is greater than the preset value. If the layout data is too much, the processing speed of the subsequent steps may be too slow. The whole layout data may be deleted, or a preset amount of layout data may be deleted, thus the purpose of saving the memory of the mobile terminal is achieved.

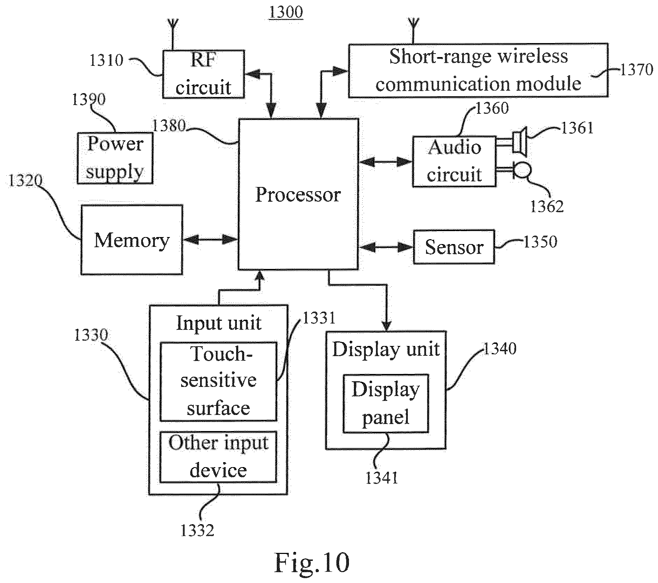

As shown in Fig. 10, an electronic device is further provided by an embodiment of the present disclosure. The electronic device is used to implement the method for processing the e-book document provided in the above embodiments. The electronic device is described in detail as below.

The electronic device 1300 may include a RF (Radio Frequency) circuit 1310, a memory 1320 including one or more computer readable storage media, an input unit 1330, a display unit 1340, a sensor 1350, an audio circuit 1360, a short-range wireless communication module 1370, a processor 1380 including one or more processing cores and a power supply 1390 or the like. Those skilled in the art could understand, a structure of a electronic device shown in Fig. 13 does not limit the electronic device, and the electronic device may include more or less parts than those of Fig. 13, or may combine certain parts, or may have different arrangements of parts.

The RF circuit 1310 may be used to receive and send information or receiving and sending signals in a process of calling. Particularly, after downlink information is received from a base station, the downlink information is processed by one or more processors 1380; and uplink data is sent to the base station. Generally, the RF circuit 1310 includes an antenna, at least one amplifier, a tuner, one or more oscillators, a subscriber identity module (SIM) card, a transceiver, a coupler, a LNA (Low Noise Amplifier) and a duplexer, etc., but it is not limited thereto. Furthermore, the RF circuit 1310 may also communicate with a network and other apparatuses by wireless communication. The wireless communication may use any communication standard or protocol including GSM (Global System of Mobile communication), GPRS (General Packet Radio Service), CDMA (Code Division Multiple Access), WCDMA (Wideband Code Division Multiple Access), LTE (Long Term Evolution), E-mail, SMS (Short Messaging Service) or the like, but it is not limited thereto.

The memory 1320 may be used to store software programs and modules. The processor 1380 executes various kinds of function applications and data processing by operating the software programs and modules stored in the memory 1320. The memory 1320 may mainly include a program storing area and a data storing area, wherein the program storing area may store an operating system, at least one application program required for functions such as a sound playing function, and an image playing function; and the data storing area may store data such as audio data and a telephone book, created in accordance with the use of the electronic device 1300. Furthermore, the memory 1320 may include a high speed random access memory or a nonvolatile memory, or for example, at least one magnetic disk storage device, a flash memory device or other nonvolatile solid-state memory devices. Correspondingly, the memory 1320 may also include a storage controller, to provide the processor 1380 and the input unit 1330 with an access to the memory 1320.

The input unit 1330 may be used to receive the input figures or character information, and generate signal input from a keyboard, a mouse, an operating stick, an optical device or a trackball related to user settings and function control. For example, the input unit 1330 may include a touch-sensitive surface 1331 and other input device 1332. The touch-sensitive surface 1331, which is also referred to as a touch display screen or a touch panel, may collect touch operations from a user thereon or nearby (for example, operations on the touch-sensitive surface 1331 or near the touch-sensitive surface 1331 by a user using any appropriate object or accessory such as a finger, or a touch pen), and may drive a corresponding connecting device according to a preset program. Alternatively, the touch-sensitive surface 1331 may include two portions including a touch detection device and a touch controller, wherein the touch detection device detects touch orientations of a user, and detects signals brought up by touch operations, then transmits the signals to the touch controller; the touch controller receives touch information from the touch detection device, and converts the touch information into coordinates of touch points to be sent to the processor 1380, and the touch controller receives commands sent from the processor 1380 and execute the commands. Furthermore, the touch-sensitive surface 1331 may be realized by using various types of manners such as resistance-type, capacitance-type, infrared ray and surface acoustic wave. In addition to the touch-sensitive surface 1331, the input unit 1330 may also include other input device 1332. For example, the other input device 1332 may include one or more physical keyboards, a function key (such as a volume control key, or a switching key, etc.), a trackball, a mouse and an operating stick, but it is not limited thereto.

The display unit 1340 may be used to display information input by a user or information supplied to the user and various kinds of graphical user interfaces of the electronic device 1300, and these graphical user interfaces may consist of a graph, a text, an icon, a video or any combination thereof. The display unit 1340 may include a display panel 1341, and alternatively, the display panel 1341 may be configured by using LCD (Liquid Crystal Display), OLED (Organic Light-Emitting Diode) or the like. Further, the touch-sensitive surface 1331 may cover the display panel 1341, and after the touch-sensitive surface 1331 detects touch operations thereon or nearby, the touch-sensitive surface 1331 transmits the touch operations to the processor 1380 to determine types of touch events, subsequently, the processor 1380 provides a corresponding visual output on the display panel 1341 according to the types of the touch events. In Fig. 13, although the touch-sensitive surface 1331 and the display panel 1341 are two separate parts to realize input and output functions, in some certain embodiments, the touch-sensitive surface 1331 and the display panel 1341 may be integrated to realize the input and output functions.

The electronic device 1300 may also include at least one kind of sensor 1350 such as a light sensor, a motion sensor and other sensors. For example, the light sensor may include an ambient light sensor and a proximity sensor, wherein the ambient light sensor may adjust a luminance of the display panel 1341 according to luminance of ambient light, the proximity sensor may turn off the display panel 1341 and/or its backlight when the electronic device 1300 moves to an ear. As one of motion sensors, a gravity acceleration sensor may detect values of accelerations in respective directions (usually, three-axis directions), and may detect a value and a direction of gravity when in stationary state, and may be used in applications for identifying a phone pose (such as switching between horizontal and vertical screens, related games, magnetometer pose calibration), related functions of vibration identification (such as a pedometer, a knock), etc.; the electronic device 1300 may also be configured with other sensors such as a gyroscope, a barometer, a hygrometer, a thermometer, and an infrared sensor, which are not described repeatedly.

The audio circuit 1360, a speaker 1361 and a microphone 1362 may provide an audio interface between a user and the electronic device 1300. The audio circuit 1360 may convert received audio data into electrical signals and transmit the electrical signals to the speaker 1361, then the speaker 1361 converts the electrical signals into sound signals to be output; on the other hand, the microphone 1362 converts collected sound signals into electrical signals, the audio circuit 1360 receives the electrical signals and converts the electrical signals into audio data, the audio data is output to the processor 1380 to be processed, then the audio data is sent to another terminal apparatus through the RF circuit 1310, or the audio data is output to the memory 1320 to be further processed. The audio circuit 1360 may include an earplug jack, to provide communication between a peripheral headset and the electronic device 1300.

The wireless communication unit 1370 may be a WIFI (Wireless Fidelity) module or a Bluetooth module or the like, through which the electronic device 1300 may assist a user to receive and send emails, browse webpage and access streaming media. The wireless communication unit 1370 provides the user with wireless broadband Internet access. Although Fig. 13 shows the wireless communication unit 1370, it shall be understood that the electronic device 1300 does not have to include the wireless communication unit 1370, and the wireless communication unit 1370 can be completely omitted as needed within a scope that does not change the nature of the present disclosure.

The processor 1380 is a control center of the electronic device 1300, couples to respective parts of an entire electronic device by using various kinds of interfaces and circuits, and executes various kinds of functions of the electronic device 1300 and processes data by operating or executing software programs and/or modules stored in the memory 1320 and calling data stored in the memory 1320, thereby to monitor the entire electronic device. Alternatively, the processor 1380 may include one or more processing cores; for example, the processor 1380 may integrate an application processor and a modulation-demodulation processor, wherein the application processor mainly processes an operating system, a user interface and an application program, and the modulation-demodulation processor mainly processes wireless communication. It may be understood that the modulation-demodulation processor may not be integrated into the processor 1380.

The electronic device 1300 also includes the power supply 1390 (such as a battery) that supplies power to the respective parts. Preferably, the power supply may be logically coupled with the processor 1380 by a power supply management system, thereby realizing functions such as management of charging, discharging and power consumption by the power supply management system. The power supply 1390 may also include any component such as one or more DC or AC power supplies, a recharging system, a power supply failure detection circuit, a power supply converter or inverter, a power supply state indicator.

Although not shown, the electronic device 1300 may also include a camera, or a Bluetooth module, etc., which is not described repeatedly. Specifically, in the present embodiment, a display unit of the terminal apparatus is a touch screen display.

The electronic device 1300 further includes a memory and one or more programs, wherein the one or more programs are stored in the memory and are configured to be executed by the one or more processors, and the one or more programs include instructions for performing the method of processing and e-book document, the instructions includes:
obtaining an e-book document;
dividing content of the e-book document into a plurality of segments in accordance with a preset segmentation manner;
composing the plurality of segments into an ordered segment group;
selecting one segment from the segment group as a current segment;
parsing the content of the current segment to generate layout data; and
generating a page image in accordance with the layout data.

The implementing of the above method may refer to the above method embodiments, which is not described repeatedly.

It should be noted that the embodiments shown in Fig. 1 to Fig. 10 are only the preferred embodiments described in the present disclosure, those skilled in the art may design more embodiments on this basis, which are not described repeatedly.

Respective embodiments in this description are described in a step-up manner. For every embodiment, its differences from other embodiments are illustrated for emphasis, and the same or similar parts between respective embodiments are referred to each other. As for the above respective device embodiments, since they are substantially similar to the method embodiments, the description thereof are relatively simple, and the correlated portions thereof may refer to the descriptions for the corresponding portions in the method embodiments.

It should be appreciated for those skilled in the art that information, messages, and signals may be represented by any one of many different processes and techniques. For example, the above mentioned messages and information may be represented as voltages, currents, electromagnetic waves, magnetic fields or magnetic fields particles, optical fields or any combination thereof.

Those skilled in the art may further realize that units and algorithm steps described in combination of embodiments disclosed herein may be implemented in electronic hardware, computer software, or a combination of them. To clearly illustrate the interchangeability of hardware and software, composition and steps in various examples has been generally described in accordance with the functions in the above descriptions. Whether those functions are performed by hardware or software may depend upon the particular application and design constraints of the technical solutions. Those skilled in the art may apply different method for every particular application to achieve the described functions, without being deemed as going beyond the scope of this disclosure.

The steps of the methods or algorithm described in combination with embodiments disclosed herein may be implemented directly in hardware, software modules executed by a processor, or a combination of both. Software modules may be placed in a random access memory (RAM), a memory, a read only memory (ROM), an electrically programmable ROM, an electrically erasable programmable ROM, a registers, a hard disk, a removable disk, a CD-ROM, or any other known storage medium in the technical field. The above description of the disclosed embodiments may enable those skilled in the art to realize or apply the present disclosure.

It will be apparent to those skilled in the art that the present disclosure may have various modifications. The general principles defined herein may be implemented in other embodiments. Therefore, the present disclosure is not limited to those embodiments illustrated herein, but to the scope of the appended claims.

## Claims

1. A method for processing an e-book document, wherein the method comprises:
Obtaining (101) an e-book document, wherein the e-book document is an HTML document;
Dividing (102) content of the e-book document into a plurality of segments in accordance with a preset segmentation manner;
Composing (103) the plurality of segments into an ordered segment group;
Selecting (104) one segment from the segment group as a current segment;
Parsing (105) the content of the current segment to generate layout data; and
Generating (106) a page image in accordance with the layout data, wherein generating a page image comprises performing a paging process on the layout data to generate a page layout frame, generating a page object according to the page layout frame and the layout data and rendering the page object to generate the page image; and,
wherein if a page number, corresponding to a request point, is not obtained during the page object generating process, then a temporary parsing process is executed to obtain the requested page; the temporary parsing process comprising identifying a segment corresponding to the request point, creating a parsing state interval of the e-book document to be used to perform paging for the identified segment, calling a layout driving process, and generating, by the layout driving process performing the paging process for the created parsing state interval, a temporary parsing page space to obtain the page number corresponding to the request point.

2. The method according to claim 1, wherein after the generating the layout data, the method further comprises:
Recording (206) position information of the current segment in the segment group; and
judging (207) whether data amount of the layout data is less than a preset value, and if the data amount is less than the preset value, selecting (208) a next segment of the current segment according to the position information, using the next segment as the current segment, and returning to the parsing the content of the current segment.

3. The method according to claim 1 or claim 2, wherein the dividing the content of the e-book document into the plurality of segments in accordance with the preset segmentation manner comprises sub-steps of:
determining a segment size; and
dividing the content of the e-book document into segments having the same size as the segment size.

4. The method according to claim 1, 2 or 3, wherein the method further comprises:
judging whether information of a start point of the segment is complete, and if it is not complete, moving from the start point of the segment to a last segment to determine a start point of the information, and using the start point of the information as the start point of the segment and an end point of the last segment; or
judging whether information of a start point of the segment is complete, and if it is not complete, moving from the start point of the segment to an end point of the segment to determine an end point of the information, and using the end point of the information as the start point of the segment and the end point of a last segment.

5. The method according to any of claims 1 to 4, wherein the method further comprises:
judging whether information of an end point of the segment is complete, and if it is not complete, moving from the end point of the segment to a next segment to determine an end point of the information, and using the end point of the information as the end point of the segment and a start point of the next segment; or
judging whether information of an end point of the segment is complete, and if it is not complete, moving from the end point of the segment to a start point of the segment to determine a start point of the information, and using the start point of the information as the end point of the segment and a start point of a next segment.

6. The method according to any of claims 1 to 5, 2. wherein the method further comprises:
judging whether layout atomic data contained in the layout data is used within a preset time period, and if it is not used, deleting the layout atomic data.

7. The method according to any of claims 1 to 6, wherein the method further comprises:
judging whether memory occupied by layout atomic data (31) contained in the layout data is greater than a preset value, and if it is greater than the preset value, deleting the layout atomic data.

8. A terminal comprising:
an obtaining module (11) configured to obtain an e-book document, wherein the e-book document is an HTML document;
a segmentation module (12) configured to divide content of the e-book document into a plurality of segments in accordance with a preset segmentation manner;
a composing module (13) configured to compose the plurality of segments into an ordered segment group;
a selecting module (14) configured to select one segment from the segment group as a current segment;
a parsing module (15) configured to parse the content of the current segment to generate layout data; and
a generating module (16) configured to generate a page image in accordance with the layout data, wherein the generating module (16) is configured to perform a paging process on the layout data to generate a page layout frame, to generate a page object according to the page layout frame and the layout data and to render the page object to generate the page image; and
wherein the generating module (16) is further configured to execute a temporary parsing process to obtain the requested page if a page number, corresponding to a request point, is not obtained during the page object generating process; the temporary parsing process comprising identifying a segment corresponding to the request point, creating a parsing state interval of the e-book document to be used to perform paging for the identified segment, calling a layout driving process, and generating, by the layout driving process performing the paging process for the created parsing state interval, a temporary parsing page space to obtain the page number corresponding to the request point.

9. The terminal according to claim 8, wherein the terminal further comprises:
a recording module (26) configured to record position information of the current segment in the segment group;
a first judging module (27) configured to judge whether data amount of the layout data is less than a preset value; and
a first executing module (28) configured to, when the data amount is less than the preset value, select a next segment of the current segment according to the position information, use the next segment as the current segment, and then return to execute the parsing module.

10. The terminal according to claims 8 or 9, wherein the segmentation module comprises:
a segment size determining unit (121) configured to determine a segment size; and
a dividing unit (122) configured to divide the content of the e-book document into segments having the same size as the segment size.

11. The terminal according to claims 8, 9, or 10 wherein the terminal further comprises:
a second judging module (33) configured to judge whether information of a start point of the segment is complete; and a second executing module (34) configured to, when the information of the start point of the segment is not complete, move forward from the start point of the segment to determine a start point of the information, and use the start point of the information as the start point of the segment; or
a third judging module configured to judge whether information of a start point of the segment is complete; and a third executing module configured to, when judging the information of the start point of the segment is not complete, move from the start point of the segment to an end point of the segment to determine an end point of the information, and use the end point of the information as the start point of the segment and an end point of a last segment.

12. The terminal according to claims 8, 9, 10 or 11 wherein the terminal further comprises:
a fourth judging module configured to judge whether information of an end point of the segment is complete; and a fourth executing module configured to, when the information of the end point of the segment is not complete, move from the end point of the segment to a next segment to determine an end point of the information, and use the end point of the information as the end point of the segment and a start point of the next segment; or
a fifth judging module configured to judge whether information of an end point of the segment is complete; and a fifth executing module configured to, when the information of the end point of the segment is not complete, move from the end point of the segment to a start point of the segment to determine a start point of the information, and use the start point of the information as the end point of the segment and a start point of a next segment.

13. The terminal according to any of claims 8 to 12, wherein the terminal further comprises:
a sixth judging module (46) configured to judge whether layout atomic data contained in the layout data is used within a preset time period; and
a sixth executing module (47) configured to delete the layout atomic data when the layout atomic data is not used within the preset time period.

14. The terminal according to any of claims 8 to 13, wherein the terminal further comprises:
a seventh judging module configured to judge whether memory occupied by layout atomic data contained in the layout data is greater than a preset value; and
a seventh executing module configured to delete the layout atomic data when the memory occupied by the layout atomic data is greater than the preset value.

15. A program product having stored therein instructions that, when executed by one or more processors of a terminal, causes the terminal to perform the steps of any of claims 1 to 7.

## Patentansprüche

1. Verfahren zur Verarbeitung eines E-Buch-Dokuments, wobei das Verfahren Folgendes umfasst:
Abrufen (101) eines E-Buch-Dokuments, wobei das E-Buch-Dokument ein HTML-Dokument ist;
Aufteilen (102) des Inhalts des E-Buch-Dokuments in mehrere Segmente gemäß einer vorab festgelegten Segmentierungsweise;
Zusammensetzen (103) der mehreren Segmente in eine geordnete Segmentgruppe;
Auswählen (104) eines Segments aus der Segmentgruppe als aktuelles Segment;
Analysieren (105) des Inhalts des aktuellen Segments, um Layout-Daten zu erzeugen; und
Erzeugen (106) eines Seitenbilds gemäß den Layout-Daten, wobei das Erzeugen eines Seitenbilds das Ausführen eines Paging-Prozesses an den Layout-Daten, um einen Seitenlayout-Rahmen zu erzeugen, das Erzeugen eines Seitenobjekts gemäß dem Seitenlayout-Rahmen und den Layout-Daten und das Rendern des Seitenobjekts zum Erzeugen des Seitenbilds umfasst; und
wobei, falls keine Seitenzahl entsprechend einem Anforderungspunkt während des Erzeugungsprozesses des Seitenobjekts erhalten wird, dann ein temporärer Analysierprozess ausgeführt wird, um die angeforderte Seite zu erhalten; wobei der temporäre Analysierprozess das Identifizieren eines Segments entsprechend dem Anforderungspunkt, das Bilden eines Analysezustandsintervalls des E-Buch-Dokuments, das zu verwenden ist, um das Paging für das identifizierte Segment durchzuführen, das Aufrufen eines Layoutaktivierungsprozesses und das Erzeugen eines temporären Analyseseitenraums durch den den Paging-Prozess für das gebildete Analysezustandsintervall ausführenden Layoutaktivierungsprozess umfasst, um die Seitenzahl entsprechend dem Anforderungspunkt zu erhalten.

2. Verfahren nach Anspruch 1, wobei nach dem Erzeugen der Layout-Daten das Verfahren ferner Folgendes umfasst:
Registrieren (206) von Positionsinformationen des aktuellen Segments in der Segmentgruppe; und
Entscheiden (207), ob die Datenmenge der Layout-Daten geringer als ein vorab festgelegter Wert ist, und falls die Datenmenge geringer als der vorab festgelegte Wert ist, Auswählen (208) eines nächsten Segments des aktuellen Segments gemäß den Positionsinformationen unter Verwendung des nächsten Segments als aktuelles Segment, und Zurückkehren zum Analysieren des Inhalts des aktuellen Segments.

3. Verfahren nach Anspruch 1 oder Anspruch 2, wobei das Aufteilen des Inhalts des E-Buch-Dokuments in die mehreren Segmente gemäß der vorab festgelegten Segmentierungsweise die folgenden Teilschritte umfasst:
Bestimmen einer Segmentgröße; und
Aufteilen des Inhalts des E-Buch-Dokuments in Segmente mit der gleichen Größe wie die Segmentgröße.

4. Verfahren nach Anspruch 1, 2 oder 3, wobei das Verfahren ferner Folgendes umfasst:
Entscheiden, ob Informationen von einem Startpunkt des Segments vollständig sind, und falls sie nicht vollständig sind, Bewegen vom Startpunkt des Segments zu einem letzten Segment, um einen Startpunkt der Informationen zu bestimmen, und Verwenden des Startpunkts der Informationen als Startpunkt des Segments und als Endpunkt des letzten Segments; oder
Entscheiden, ob Informationen von einem Startpunkt des Segments vollständig sind, und falls sie nicht vollständig sind, Bewegen von dem Startpunkt des Segments zu einem Endpunkt des Segments, um einen Endpunkt der Informationen zu bestimmen, und Verwenden des Endpunkts der Informationen als Startpunkt des Segments und als Endpunkt eines letzten Segments.

5. Verfahren nach einem der Ansprüche 1 bis 4, wobei das Verfahren ferner Folgendes umfasst:
Entscheiden, ob Informationen von einem Endpunkt des Segments vollständig sind, und falls sie nicht vollständig sind, Bewegen von dem Endpunkt des Segments zu einem nächsten Segment, um einen Endpunkt der Informationen zu bestimmen, und Verwenden des Endpunkts der Informationen als Endpunkt des Segments und als Startpunkt des nächsten Segments; oder
Entscheiden, ob Informationen von einem Endpunkt des Segments vollständig sind, und falls sie nicht vollständig sind, Bewegen von dem Endpunkt des Segments zu einem Startpunkt des Segments, um einen Startpunkt der Informationen zu bestimmen, und Verwenden des Startpunkts der Informationen als Endpunkt des Segments und als Startpunkt eines nächsten Segments.

6. Verfahren nach einem der Ansprüche 1 bis 5, wobei das Verfahren ferner Folgendes umfasst:
Entscheiden, ob in den Layout-Daten enthaltene atomare Layout-Daten innerhalb eines vorab festgelegten Zeitraums verwendet werden, und falls sie nicht verwendet werden, Löschen der atomaren Layout-Daten.

7. Verfahren nach einem der Ansprüche 1 bis 6, wobei das Verfahren ferner Folgendes umfasst:
Entscheiden, ob der von in den Layout-Daten enthaltenen atomaren Layout-Daten (31) eingenommene Speicherraum größer als ein vorab festgelegter Wert ist, und falls er größer als der vorab festgelegte Wert ist, Löschen der atomaren Layout-Daten.

8. Endgerät, umfassend:
ein Abrufmodul (11), das dazu ausgebildet ist, ein E-Buch-Dokument abzurufen, wobei das E-Buch-Dokument ein HTML Dokument ist;
ein Segmentierungsmodul (12), das dazu ausgebildet ist, den Inhalt des E-Buch-Dokuments in mehrere Segmente gemäß einer vorab festgelegten Segmentierungsweise aufzuteilen;
ein Zusammensetzungsmodul (13), das dazu ausgebildet ist, die mehreren Segmente in eine geordnete Segmentgruppe zusammenzusetzen;
ein Auswahlmodul (14), das dazu ausgebildet ist, ein Segment aus der Segmentgruppe als aktuelles Segment auszuwählen;
ein Analysiermodul (15), das dazu ausgebildet ist, den Inhalt des aktuellen Segments zu analysieren, um Layout-Daten zu erzeugen; und
ein Erzeugungsmodul (16), das dazu ausgebildet ist, ein Seitenbild gemäß den Layout-Daten zu erzeugen, wobei das Erzeugungsmodul (16) dazu ausgebildet ist, einen Analysierprozess an den Layout-Daten durchzuführen, um einen Seitenlayout-Rahmen zu erzeugen, ein Seitenobjekt gemäß dem Seitenlayout-Rahmen und den Layout-Daten zu erzeugen und das Seitenobjekt zum Erzeugen des Seitenbilds zu rendern; und
wobei das Erzeugungsmodul (16) ferner dazu ausgebildet ist, einen temporären Analysierprozess auszuführen, um die angeforderte Seite abzurufen, falls keine Seitenzahl entsprechend einem Anforderungspunkt während des Erzeugungsprozesses des Seitenobjekts erhalten wird; wobei der temporäre Analysierprozess das Identifizieren eines Segments entsprechend dem Anforderungspunkt, das Bilden eines Analysezustandsintervalls des E-Buch-Dokuments, das zu verwenden ist, um das Paging für das identifizierte Segment durchzuführen, das Aufrufen eines Layoutaktivierungsprozesses und das Erzeugen eines temporären Analyseseitenraums durch den den Paging-Prozess für das gebildete Analysezustandsintervall ausführenden Layoutaktivierungsprozess umfasst, um die Seitenzahl entsprechend dem Anforderungspunkt zu erhalten.

9. Endgerät nach Anspruch 8, wobei das Endgerät ferner Folgendes umfasst:
ein Registriermodul (26), das dazu ausgebildet ist, Positionsinformationen des aktuellen Segments in der Segmentgruppe zu registrieren;
ein erstes Entscheidungsmodul (27), das dazu ausgebildet ist, zu entscheiden, ob die Datenmenge der Layout-Daten geringer als ein vorab festgelegter Wert ist; und
ein erstes Ausführungsmodul (28), das dazu ausgebildet ist, wenn die Datenmenge geringer als der vorab festgelegte Wert ist, ein nächstes Segment des aktuellen Segments gemäß den Positionsinformationen auszuwählen, das nächste Segment als aktuelles Segment zu verwenden und dann zum Ausführen des Analysiermoduls zurückzukehren.

10. Endgerät nach den Ansprüchen 8 oder 9, wobei das Segmentierungsmodul Folgendes umfasst:
eine Bestimmungseinheit der Segmentgröße (121), die dazu ausgebildet ist, eine Segmentgröße zu bestimmen; und
eine Aufteilungseinheit (122), die dazu ausgebildet ist, den Inhalt des E-Buch-Dokuments in Segmente mit der gleichen Größe wie die Segmentgröße aufzuteilen.

11. Endgerät nach den Ansprüchen 8, 9 oder 10, wobei das Endgerät ferner Folgendes umfasst:
ein zweites Entscheidungsmodul (33), das dazu ausgebildet ist, zu entscheiden, ob Informationen von einem Startpunkt des Segments vollständig sind; und ein zweites Ausführungsmodul (34), das dazu ausgebildet ist, wenn die Informationen von dem Startpunkt des Segments nicht vollständig sind, sich von dem Startpunkt des Segments vorwärts zu bewegen, um einen Startpunkt der Informationen zu bestimmen, und den Startpunkt der Informationen als Startpunkt des Segments zu verwenden; oder
ein drittes Entscheidungsmodul, das dazu ausgebildet ist, zu entscheiden, ob Informationen von einem Startpunkt des Segments vollständig sind; und ein drittes Ausführungsmodul, das dazu ausgebildet ist, wenn entschieden wird, dass die Informationen von dem Startpunkt des Segments nicht vollständig sind, sich von dem Startpunkt des Segments zu einem Endpunkt des Segments zu bewegen, um einen Endpunkt der Informationen zu bestimmen, und den Endpunkt der Informationen als Startpunkt des Segments und als Endpunkt eines letzten Segments zu verwenden.

12. Endgerät nach den Ansprüchen 8, 9, 10 oder 11, wobei das Endgerät ferner Folgendes umfasst:
ein viertes Entscheidungsmodul, das dazu ausgebildet ist, zu entscheiden, ob Informationen von einem Endpunkt des Segments vollständig sind; und ein viertes Ausführungsmodul, das dazu ausgebildet ist, wenn die Informationen von dem Endpunkt des Segments nicht vollständig sind, sich von dem Endpunkt des Segments zu einem nächsten Segment zu bewegen, um einen Endpunkt der Informationen zu bestimmen, und den Endpunkt der Informationen als Endpunkt des Segments und als Startpunkt des nächsten Segments zu verwenden; oder
ein fünftes Entscheidungsmodul, das dazu ausgebildet ist, zu entscheiden, ob Informationen von einem Endpunkt des Segments vollständig sind; und ein fünftes Ausführungsmodul, das dazu ausgebildet ist, wenn die Informationen von dem Endpunkt des Segments nicht vollständig sind, sich von dem Endpunkt des Segments zu einem Startpunkt des Segments zu bewegen, um einen Startpunkt der Informationen zu bestimmen, und den Startpunkt der Informationen als Endpunkt des Segments und als Startpunkt eines nächsten Segments zu verwenden.

13. Endgerät nach einem der Ansprüche 8 bis 12, wobei das Endgerät ferner Folgendes umfasst:
ein sechstes Entscheidungsmodul (46), das dazu ausgebildet ist, zu entscheiden, ob in den Layout-Daten enthaltene atomare Layout-Daten innerhalb eines vorab festgelegten Zeitraums verwendet werden; und
ein sechstes Ausführungsmodul (47), das dazu ausgebildet ist, die atomaren Layout-Daten zu löschen, wenn die atomaren Layout-Daten nicht innerhalb des vorab festgelegten Zeitraums verwendet werden.

14. Endgerät nach einem der Ansprüche 8 bis 13, wobei das Endgerät ferner Folgendes umfasst:
ein siebtes Entscheidungsmodul, das dazu ausgebildet ist, zu entscheiden, ob der von in den Layout-Daten enthaltenen atomaren Layout-Daten eingenommene Speicherraum größer als ein vorab festgelegter Wert ist; und
ein siebtes Ausführungsmodul, das dazu ausgebildet ist, die atomaren Layout-Daten zu löschen,
wenn der von den atomaren Layout-Daten eingenommene Speicherraum größer als der vorab festgelegte Wert ist.

15. Programmprodukt mit darauf gespeicherten Anweisungen, die bei Ausführung durch einen oder mehrere Prozessoren eines Endgeräts bewirken, dass das Endgerät die Schritte nach einem der Ansprüche 1 bis 7 durchführt.

## Revendications

1. Procédé de traitement d'un document de livre électronique, le procédé comprenant :
l'obtention (101) d'un document de livre électronique, le document de livre électronique étant un document de type HTML ;
la division (102) du contenu du document de livre électronique en une pluralité de segments, conformément à une manière préétablie de segmentation ;
la composition (103) de la pluralité de segments en un groupe ordonné de segments ;
la sélection (104) d'un segment à partir d'un groupe de segments en tant que segment actuel ;
l'analyse (105) du contenu du segment actuel pour produire des données de mise en page ; et
la production (106) d'une image de page conforme aux données de mise en page, la production d'une image de page effectuant un processus de pagination sur les données de mise en page pour produire un cadre de mise en page, la production d'un objet de page conforme au cadre de mise en page et aux données de mise en page, et le rendu de l'objet page permettant d'obtenir l'image de la page ; et
à défaut d'obtenir un numéro de page correspondant à un point de requête lors du processus de production d'objet, alors un processus temporaire d'analyse est exécuté pour obtenir la page requise ; le processus temporaire d'analyse identifiant un segment correspondant au point de requête créant un intervalle d'état d'analyse du document de livre électronique à utiliser pour effectuer la pagination du segment identifié, l'appel d'un processus de commande de mise en page et la production, grâce au processus de commande de mise en page effectuant le processus de pagination pour l'intervalle d'état d'analyse créé, un espace de page d'analyse temporaire pour obtenir le numéro de page correspondant au point de requête.

2. Procédé selon la revendication 1, dans lequel après la production des données de mise en page, le procédé comprend en outre les étapes consistant à :
enregistrer (206) des informations de position du segment actuel dans le groupe de segments ; et
juger (207) si la quantité de données des données de mise en page est inférieure à une valeur préétablie, et si la quantité de données est inférieure à la valeur préétablie, sélectionner (208) d'un segment suivant le segment actuel conformément aux informations de position, grâce au segment suivant en tant que segment actuel, puis revenir à l'analyse du contenu du segment actuel.

3. Procédé selon la revendication 1 ou la revendication 2, dans lequel la division du contenu du document de livre électronique en une pluralité de segments conformément à la manière préétablie de segmentation comprend les sous-étapes suivantes :
détermination d'une taille de segment ; et
division du contenu du document de livre électronique en segments de même taille que celle du segment.

4. Procédé selon la revendication 1, 2 ou 3, le procédé comprenant en outre les étapes consistant à :
juger si les informations d'un point de départ du segment sont complètes, et si tel n'est pas le cas, se déplacer du point de départ du segment à un dernier segment pour déterminer un point de départ des informations et utiliser le point de départ des informations comme point de départ du segment et comme point final du dernier segment ; ou
juger si les informations d'un point de départ du segment sont complètes, et si tel n'est pas le cas, se déplacer du point de départ du segment à un point final du segment pour déterminer un point final des informations et utiliser le point final des informations comme point de départ du segment et comme point final d'un dernier segment.

5. Procédé selon l'une quelconque des revendications 1 à 4, le procédé comprenant en outre les étapes consistant à :
juger si les informations d'un point final du segment sont complètes, et si tel n'est pas le cas, déplacer le point final du segment à un segment suivant pour déterminer un point final des informations, et utiliser le point final des informations comme point final du segment et comme point de départ du segment suivant ; ou
juger si les informations d'un point final du segment sont complètes, et si tel n'est pas le cas, déplacer le point final du segment vers un point de départ du segment pour déterminer un point de départ des informations, et utiliser le point de départ des informations comme point final du segment et comme point de départ d'un segment suivant.

6. Procédé selon l'une quelconque des revendications 1 à 5, le procédé comprenant en outre les étapes consistant à :
juger si les données atomiques de mise en page contenues parmi les données de mise en page sont utilisées au cours d'une durée préétablie et si tel n'est pas le cas, supprimer les données atomiques de mise en page.

7. Procédé selon l'une quelconque des revendications 1 à 6, le procédé comprenant en outre les étapes consistant à :
juger si la mémoire occupée par les données atomiques de mise en page (31) contenues dans les données de mise en page dépasse une valeur préétablie, et si elle dépasse la valeur préétablie, supprimer les données atomiques de mise en page.

8. Terminal comprenant :
un module d'obtention (11) configuré pour obtenir un document de livre électronique, le document de livre électronique étant un document de type HTML ;
un module de segmentation (12) configuré pour diviser le contenu du document de livre électronique en une pluralité de segments conformément à une manière préétablie de segmentation ;
un module de composition (13) configuré pour composer la pluralité de segments en un groupe ordonné de segments ;
un module de sélection (14) configuré pour sélectionner un segment dans le groupe de segments sous forme de segment actuel ;
un module d'analyse (15) configuré pour analyser le contenu du segment actuel pour produire des données de mise en page ; et
un module de production (16) configuré pour produire une image de page conforme aux données de mise en page, le module de production (16) étant configuré pour effectuer un processus de pagination sur les données de mise en page pour produire un cadre de mise en page, pour produire un objet de page conforme au cadre de mise en page et les données de mise en page pour amener l'objet de page à produire l'image de page ; et
le module de production (16) étant en outre configuré pour exécuter un processus d'analyse temporaire pour obtenir la page requise en l'absence de réception d'un numéro de page, correspondant à un point de requête, lors du processus de production d'objet de page ; le processus d'analyse temporaire comprenant l'identification d'un segment correspondant au point de requête, la création d'un intervalle d'état d'analyse du document de livre électronique à utiliser pour effectuer la pagination pour le segment identifié, l'appel d'un processus de commande de mise en page et la production, par le processus de commande de mise en page effectuant le processus de pagination pour l'intervalle créé d'état d'analyse, d'un espace temporaire de page d'analyse pour obtenir le numéro de page correspondant au point de requête.

9. Terminal selon la revendication 8, le terminal comprenant en outre :
un module d'enregistrement (26), configuré pour enregistrer les informations de position du segment actuel dans le groupe de segments ;
un premier module de jugement (27) configuré pour juger si la quantité de données des données de mise en page est inférieure à une valeur préétablie ; et
un premier module d'exécution (28) configuré pour sélectionner un segment suivant le segment actuel en fonction des informations de position, utiliser le segment suivant comme segment actuel puis revenir exécuter le module d'analyse, quand la quantité de données est inférieure à la valeur préétablie.

10. Terminal selon la revendication 8 ou 9, dans lequel le module de segmentation comprend :
une unité de détermination de la taille des segments (121), configurée pour déterminer une taille de segment ; et
une unité de division (122), configurée pour diviser le contenu du document de livre électronique en segments de même taille que celle du segment.

11. Terminal selon les revendications 8, 9 ou 10, le terminal comprenant en outre :
un deuxième module de jugement (33), configuré pour juger si les informations d'un point de départ du segment sont complètes ; et un deuxième module d'exécution (34), configuré pour avancer à partir du point de départ du segment pour déterminer un point de départ des informations et pour utiliser le point de départ des informations comme point de départ du segment quand les informations du point de départ du segment ne sont pas complètes ; ou
un troisième module de jugement, configuré pour juger si les informations d'un point de départ du segment sont complètes ; et un troisième module d'exécution, configuré pour avancer du point de départ du segment à un point final du segment pour déterminer un point final des informations et pour utiliser le point final des informations comme point de départ du segment et comme un point final d'un dernier segment, quand on estime que les informations du point de départ du segment ne sont pas complètes.

12. Terminal selon les revendications 8, 9, 10 ou 11, le terminal comprenant en outre :
un quatrième module de jugement, configuré pour juger si les informations d'un point final du segment sont complètes ; et un quatrième module d'exécution, configuré pour avancer du point final du segment à un segment suivant pour déterminer un point final des informations et pour utiliser le point final des informations comme point final du segment et comme point de départ du segment suivant quand les informations du point final du segment ne sont pas complètes ; ou
un cinquième module de jugement, configuré pour juger si les informations d'un point final du segment sont complètes ; et un cinquième module d'exécution, configuré pour avancer du point final du segment à un point de départ du segment pour déterminer un point de départ des informations et pour utiliser le point de départ des informations comme un point final du segment comme point de départ d'un segment suivant, quand les informations du point final du segment ne sont pas complètes.

13. Terminal selon l'une quelconque des revendications 8 à 12, le terminal comprenant en outre :
un sixième module de jugement (46), configuré pour juger si données atomiques de mise en page contenues dans les données de mise en page sont utilisées pendant une durée préétablie ; et
un sixième module d'exécution (47), configuré pour supprimer les données atomiques de mise en page quand les données atomiques de mise en page ne sont pas utilisées pendant la durée préétablie.

14. Terminal selon l'une quelconque des revendications 8 à 13, le terminal comprenant en outre :
un septième module de jugement, configuré pour juger si la mémoire occupée par les données atomiques de mise en page contenues dans les données de mise en page dépasse une valeur préétablie ; et
un septième module d'exécution, configuré pour supprimer les données atomiques de mise en page quand la mémoire occupée par les données atomiques de mise en page dépasse la valeur préétablie.

15. Produit de type programme où sont stockées des instructions qui quand elles sont exécutées par au moins un processeur d'un terminal, amènent le terminal à réaliser les étapes des revendications 1 à 7.
